# EUROPÄISCHE PATENTSCHRIFT

(11) **EP 0 454 876 B1**
(45) Veröffentlichungstag und Bekanntmachung des Hinweises auf die Patenterteilung: **01.12.1993**
(21) Anmeldenummer: 90108182.8
(22) Anmeldetag: 28.04.1990
(51) Int. Cl.: F16L 3/22

(54) **Zweiteilige Rohrschelle**
Two-piece pipe clamp
Collier d'attache en deux pièces

(43) Veröffentlichungstag der Anmeldung: 06.11.1991
(73) Patentinhaber: A. Raymond & Cie, 38028 Grenoble (FR)
(72) Erfinder: Andre, Guy, F-38170 Seyssinet (FR); Kirchgaesser, Johannes, D-7859 Efringen-Kirchen (DE)
(74) Vertreter: Kirchgaesser, Johannes, Dipl.-Ing.

(56) Entgegenhaltungen:
- DE-A- 2 446 133
- DE-B- 1 260 895
- DE-B- 2 306 969
- DE-C- 3 444 271
- FR-A- 2 127 858
- US-A- 2 942 314
- US-A- 4 480 808

## Beschreibung

Die Erfindung bezieht sich auf eine zweiteilige Rohrschelle aus hartelastischem Kunststoff zum gegenseitigen Festlegen von wenigstens zwei nebeneinander verlaufenden Rohrleitungen nach dem Oberbegriff des Hauptanspruchs.

Diese beispielsweise durch DE-A-24 46 133 bekannte Rohrschelle wird vorzugsweise im Automobilbau dazu verwendet, um metallische Kraftstoffleitungen, die entsprechend ihrem bestimmungsgemäßen Einsatz vorgebogen und zueinander ausgerichtet sind, untereinander in dieser ausgerichteten Lage zu verbinden und dafür zu sorgen, daß die Geometrie des so vormontierten Leitungssatzes bis zum Einbau durch den Monteur erhalten bleibt. Die Rohrschelle muß hierbei die Kraftstoffleitungen sicher umgreifen und darf sich auch nachher im Betriebseinsatz angesichts der auftretenden Motor- oder Fahrgestellschwingungen nicht von selbst lösen.

Im Hinblick auf eine kompaktere Bauweise der Rohrschelle liegt der Erfindung die Aufgabe zugrunde, die Schellenform so zu gestalten, daß einerseits der Mittenabstand der Halterinnen und damit die Verlegungsbreite der Rohrleitungen möglichst klein gehalten wird und andererseits die Rohrschellenteile im Spritzgießverfahren möglichst einfach und kostengünstig hergestellt werden können.

Diese Aufgaben werden bei der eingangs erwähnten Schelle erfindungsgemäß dadurch gelöst, daß der Sicherungsbügel die gleichen elastisch aufweitbaren Klemmschenkel aufweist, wobei diese zu den Klemmschenkeln des Aufnahmeteils in Achsrichtung der Halterinnen derart versetzt angeordnet sind, daß sie beim Schließen der beiden Schellenhälften aneinander vorbeigehen.

Durch diese Merkmale wird auf einfache Weise erreicht, daß der Sicherungsbügel nicht nur über die Widerhaken direkt mit dem Aufnahmeteil verbunden, sondern gleichzeitig auch über die zusätzlichen Klemmschenkel auf den Rohrleitungen festgeklemmt wird, so daß Aufnahmeteil und Sicherungsbügel im zusammengedrückten Zustand eine festverschlossene Einheit bilden.

Durch die in den Ansprüchen 2 und 3 angegebenen konstruktiven Maßnahmen wird ferner erreicht, daß die in Achsrichtung aneinander vorbeigehenden Klemmschenkel mit ihren Rastnasen in die jeweils gegenüberliegenden Nischen eintauchen können. Hierbei werden die Rastnasen von den in die Halterinnen eingeführten Rohre zunächst auseinander gedrückt, um anschließend wieder in ihre Ausgangslage zurückzufedern, wobei die über die Rohrmitte überstehenden Rastnasen die Rohrleitung kraftschlüssig hintergreifen. Gleichzeitig rasten die Widerhaken an den Endbereichen der beiden Aufnahmeteile ineinander ein, so daß die beiden Rohrschellenhälften kraft- und formschlüssig miteinander verbunden sind. Außerdem werden die Rohre vorteilhafterweise innerhalb der Rohrschelle auf ihrer ganzen Länge vollständig umfaßt und gehalten.

Mit den Merkmalen nach Anspruch 4 wird bezweckt, daß die Halterinnen möglichst nahe nebeneinander liegen. Hierbei ist es zum leichteren Eindrücken der Rohrleitungen in die Halterinnen zweckmäßig, wenn die Rastnasen über die Breite eines Klemmschenkels wechselweise nach der einen bzw. der anderen Seite gerichtet sind, wobei der beim Eindrücken der Rohre vorgesehene Abstand zwischen der Rückseite der Rastnasen und dem angrenzenden Rohr ein leichteres Auffedern des Klemmschenkels ermöglicht.

Durch die besondere Anordnung der Widerhaken und Gegenhaken nach Anspruch 5 erhält der Sicherungsbügel die gleiche Form wie das Aufnahmeteil, so daß die Rohrschelle praktisch aus zwei gleichen ineinandersteckbaren Aufnahmeteilen besteht, die sich zudem noch leicht und kostengünstig in einer aus zwei Formhälften bestehenden Gießform herstellen lassen.

Durch die Maßnahmen nach Anspruch 6 wird außerdem noch erreicht, daß die Verhakungselemente im geschlossenen Zustand auch in axialer Richtung der Rohrleitungen festgelegt sind, so daß ein öffnen der Rohrschelle durch axiale Verschiebung einer Schellenhälfte unmöglich ist.

Anspruch 7 beinhaltet eine andere Ausführungsform der Erfindung, bei der die beiden zusammenfügbaren Aufnahmeteile jeweils zwei Reihen von Klemmschenkeln und in Achsrichtung versetzt dazu zwei Reihen von Aussparungen besitzen, wobei die Rastnasen - ähnlich wie bei dem Aufnahmeteil nach Anspruch 4 - an den randseitigen Klemmschenkeln nach der einen Seite und bei den mittigen Klemmschenkeln nach der anderen Seite gerichtet sind. Die Klemmschenkelanordnung dieser Ausführungsform bietet gegenüber der erstgenannten Form den Vorteil, daß die Rohrleitungen innerhalb des Aufnahmeteils auf einer größeren Länge umfaßt werden und daß die mittig angeordneten Klemmschenkel im gegenüberliegenden Aufnahmeteil jeweils von zwei fluchtenden Klemmschenkeln umgeben sind, so daß die beiden Schellenhälften in Achsrichtung der Rohrleitungen festgelegt sind. Durch die in den Ansprüchen 8 und 9 angegebenen Merkmale läßt sich die Verbindung zwischen den beiden geschlossenen Schellenhälften noch sicherer gestalten.

In der Zeichnung sind zwei Ausführungsbeispiele der erfindungsgemäßen Rohrschelle dargestellt und sollen nachfolgend näher erläutert werden. Es zeigt
- Fig. 1: das Aufnahmeteil einer zweiteiligen Rohrschelle für vier Rohrleitungen in Vorderansicht,
- Fig. 2: das gleiche Aufnahmeteil in Seitenansicht,
- Fig. 3: das gleiche Aufnahmeteil in Draufsicht,
- Fig. 4: das gleiche Aufnahmeteil im Schnitt gemäß Linie IV - IV in Fig. 1,
- Fig. 5: das gleiche Aufnahmeteil in perspektivischer Darstellung,
- Fig. 6: das Aufnahmeteil mit eingelegten Rohren und Sicherungsbügel vor dem Zusammenbau,
- Fig. 7: die Rohrschelle nach dem Zusammenbau in Vorderansicht,
- Fig. 8: die gleiche zusammengebaute Rohrschelle in Seitenansicht,
- Fig. 9: eine andere Ausführungsform des Aufnahmeteils in Vorderansicht,
- Fig. 10: das gleiche Aufnahmeteil in Seitenansicht,
- Fig. 11: das gleiche Aufnahmeteil in Draufsicht,
- Fig. 12: das gleiche Arnfnahmeteil in perspektivischer Darstellung,
- Fig. 13: das Aufnahmeteil mit teilweise eingelegten Rohren und Sicherungsbügel vor dem Aufdrücken,
- Fig. 14: die Rohrschelle nach dem Zusammenbau in Vorderansicht und
- Fig. 15: die gleiche zusammengebaute Rohrschelle in Seitenansicht.

Die in den Figuren dargestellte Rohrschelle dient zum gegenseitigen Festlegen von nebeneinander verlaufenden Rohrleitungen und besteht aus einem Aufnahmeteil 1 mit den Rohrleitungsquerschnitten angepaßten Halterinnen 2 sowie einem die Halterinnen 2 übergreifenden Sicherungsbügel 3. Dieser ist an den beiden Bügelenden mit Widerhaken 4 versehen, welche in entgegengerichtete Widerhaken 5 am Aufnahmeteil 1 in Schließstellung des Bügels 3 einrastbar sind.

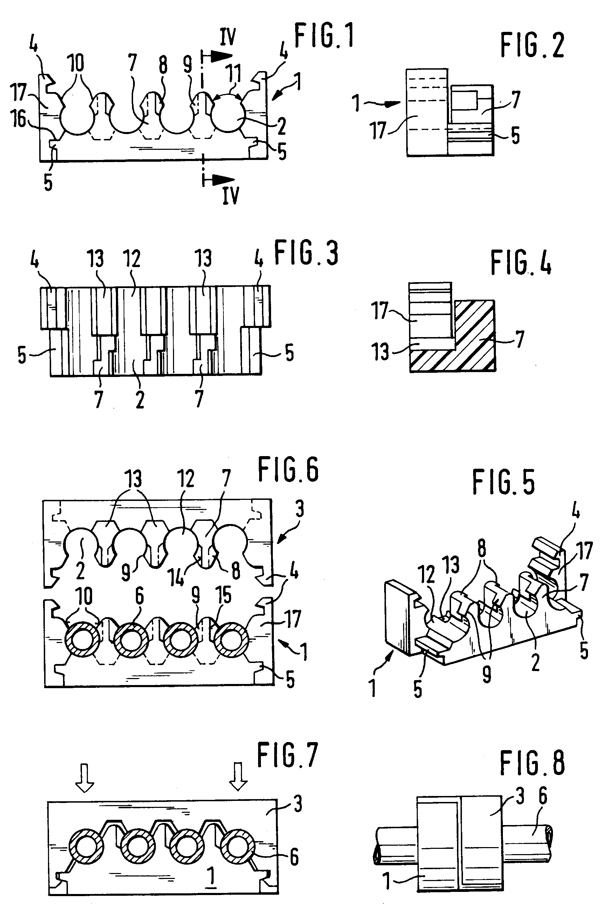

Das in den Figuren 1 bis 5 für sich alleine dargestellte Aufnahmeteil 1 besitzt entsprechend der aufzunehmenden Anzahl von Rohreitungen 6 vier Halterinnen 2, die von elastisch aufweitbaren Klemmschenkeln 7 umgeben sind. Diese weisen an ihren Enden seitlich abstehende Rastnasen 8 und 9 auf, welche den Rohrumfang der eingelegten Rohre 6 hintergreifen und dabei die Rohre festklemmen. Oberhalb der Rastnasen 8 und 9 enden die Klemmschenkel 7 in V-förmig auseinanderlaufenden Einlaufwänden 10, welche das Eindrücken der Rohrleitungen 6 erleichtern.

Der in Fig 6 oberhalb des Aufnahmeteils 1 dargestellte Sicherungsbügel 3 weist spiegelbildlich die gleichen Halterinnen 2 mit elastisch aufweitbaren Klemmschenkeln 7 auf, welche ebenfalls mit seitlich abstehenden Rastnasen 8 und 9 versehen sind. Allerdings sind die Klemmschenkel 7 des Sicherungsbügels 3 in der Aufdrückstellung zu den gleichausgebildeten Klemmschenkeln 7 des Aufnahmeteils 1 in Achsrichtung der Halterinnen 2 versetzt angeordnet, und zwar derart, daß die Klemmschenkel 7 beim Zusammendrücken der beiden Schellenhälften 1 und 3 aneinander vorbeigehen. Auf diese Weise werden die zu haltenden Rohrleitungen 6 nicht nur vom Aufnahmeteil 1 sondern auch vom Sicherungsbügel 3 durch die Klemmschenkel 7 klemmend umgriffen, so daß der Zusammenhalt zwischen den beiden Schellenhälften 1 und 3 nicht nur über die Verhakungsmittel 4 und 5 erreicht sondern auch über die Klemmschenkel 7 in Verbindung mit den Rohrleitungen 6 sichergestellt wird.

Um ein vollständiges Umgreifen der Rohrleitungen 6 auf der ganzen Schellenbreite zu erreichen, kann der zwischen den Einlaufwänden 10 freibleibende Raum 11 im gegenüberliegenden Schellenteil 1 bzw. 3 durch einen am Rohrumfang anliegenden Halterinnenabschnitt 12 ausgefüllt werden, wobei gleichzeitig zwischen zwei Haterinnenabschnitten 12 jeweils eine Aussparung 13 freibleiben muß, und zwar von einer Breite und Tiefe, welche der Form der über die Halterinnenabschnitte 12 hinausragenden Einlaufwände 10 der in die Aussparung 13 eintauchenden Klemmschenkel 7 entspricht.

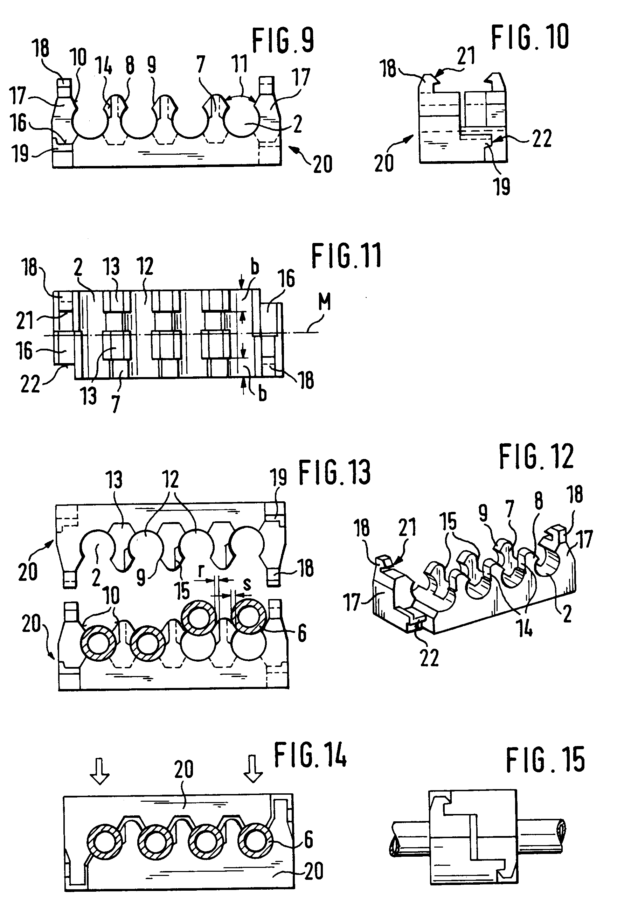

Im vorliegenden Ausführungsbeispiel befinden sich zwischen den benachbarten Halterinnen 2 jeweils nur ein Klemmschenkel 7 mit nach beiden Seiten abstehenden Rastnasen 8 bzw. 9, so daß die Rohrleitungen 6 so dicht wie möglich nebeneinander liegen können. Um beim Eindrücken der Rohrleitungen 6 das Auffedern der Klemmschenkel zu ermöglichen, dürfen die Rastnasen 8 und 9 nicht auf der gleichen Höhe liegen, sondern müssen an den Klemmschenkeln 7 in axialer Erstreckung abwechselnd nach der einen und der anderen Seite gerichtet sein. Außerdem laufen jeweils die rückseitigen Wände 14 bzw. 15 hinter den Rastnasen 8 bzw. 9 geradlinig im gleichen Abstand "r" am Rohrumfang vorbei wie die Rastnasen 8 bzw. 9 den Rohrumfang hintergreifen, so daß beim Eindrücken der Rohre die Klemmschenkel 7 entsprechend dem Nasenvorsprung "s" zurückfedern können (Fig. 13).

Die Verhakungsmittel 4 und 5 sind zwar angesichts der klemmend kraftschlüssigen Verbindung zwischen den beiden Schellenhälften 1 und 3 nicht unbedingt erforderlich, doch können sie als zusätzliche formschlüssige Verbindung noch für eine größere Sicherheit sorgen, wobei in den Figuren 1 bis 8 nur eine der vielen Verhakungsmöglichkeiten dargestellt ist. Die Widerhaken 4 befinden sich hierbei an den äußeren Klemmschenkeln 17 oberhalb der Einlaufwände 10 und sind nach innen gerichtet, während die dazugehörigen Gegenhaken 5 unterhalb der äußeren Aussparungen 16 angeordnet und nach außen gerichtet sind. Da die Klemmschenkel 7 und die Aussparungen 13 jeweils die halbe Breite des Aufnahmeteils 1 bzw. des Sicherungsbügels 3 einnehmen, kann das Aufnahmeteil 1 nach entsprechender Drehung um seine Längsachse mit einem anderen Aufnahmeteil zu einer geschlossenen Rohrschelle zusammengefügt werden. Es braucht somit nur eine Form abgespritzt zu werden, wodurch die Rohrschelle in der Herstellung billiger wird.

Um ein öffnen der Schellenhälften durch axiale Verschiebung unmöglich zu machen, liegen die Widerhaken 4 mit den zugehörigen äußeren Klemmschenkeln 17 in der Reihe der Aussparungen 13, während die Gegenhaken 5 in der Reihe der Klemmschenkel 7 angeordnet sind. Dadurch sind die Verhakungselemente 4 und 5 im geschlossenen Zustand der Rohrschelle in axialer Richtung der Rohrleitungen 6 festgelegt. Die Rohrschelle läßt sich somit nur noch durch Gewaltanwendung und Zerstörung öffnen.

In den Figuren 9 bis 15 ist eine andere Ausführungsform der erfindungsgemäßen Rohrschelle dargestellt, bei der die Klemmschenkel 7 quer zur Achsrichtung der Halterinnen 2 in zwei Reihen angeordnet sind. Die erste Reihe schließt hierbei mit der Außenwand des Aufnahmeteils 20 ab, während die zweite Reihe kurz hinter der Mitte "M" beginnt und im Abstand einer Schenkelbreite "b" vor der anderen Außenwand endet. Die zur "Einbettung" der Klemmschenkel 7 erforderlichen Aussparungen 13 und 16 befinden sich dementsprechend sowohl zwischen den beiden Reihen als auch jenseits der mittleren Reihe jeweils in der Flucht von zwei hintereinanderliegenden Klemmschenkeln 7 und 17.

Die Widerhaken 18 und Gegenhaken 19 befinden sich bei diesem Ausführungsbeispiel an den diagonal gegenüberliegenden Ecken des Aufnahmeteils 20, wobei deren Verhakungsnasen 21 und 22 parallel zur Achsrichtung der Halterinnen 2 gerichtet sind. Auch hierbei sind die diagonal gegenüberliegende Widerhaken 19 über den Einlaufwänden 10 der äußeren Klemmschenkel 17 angeformt, während die beiden Gegenhaken 19 unterhalb der äußeren Aussparungen 16 angeformt sind.

Beim Zusammenbau der beiden Schellenhälften tauchen die mittig angeordneten Klemmschenkel 7 eines Aufnahmeteils jeweils zwischen die beiden versetzt angeordneten Klemmschenkel 7 des umgekehrt aufgedrückten Aufnahmeteils 20 ein, so daß die beiden Schellenhälften 20 in axialer Richtung der Halterinnen 2 unverschiebbar festgelegt sind. Die an den diagonalen Ecken angeordneten Widerhaken 18 und Gegenhaken 19 verbrauchen wenig Platz und ergänzen sich derart, daß die Rohrschelle im geschlossenen Zustand einen vollständig massiven Körper ergibt.

## Patentansprüche

1. Zweiteilige Rohrschelle aus hartelastischem Kunststoff zum gegenseitigen Festlegen von wenigstens zwei nebeneinander verlaufenden Rohrleitungen, bestehend aus einem Aufnahmeteil mit wenigstens zwei den Rohrleitungsquerschnitten angepaßten Halterinnen und elastisch aufweitbaren Klemmschenkeln mit den Rohrumfang hintergreifenden Rastnasen und V-förmig auseinanderlaufenden Einführwänden, sowie einem die Halterinnen und deren Klemmschenkel übergreifenden Sicherungsbügel, der an den beiden Bügelenden mit Widerhaken versehen ist, welche in entgegengerichtete Widerhaken an den äußeren Klemmschenkeln des Aufnahmeteils in Schließstellung des Bügels einrastbar sind, **dadurch gekennzeichnet,** daß der Sicherungsbügel (3) die gleichen elastisch aufweitbaren Klemmschenkel (7) aufweist, wobei diese zu den Klemmschenkeln (7) des Aufnahmeteils (1) in Achsrichtung der Halterinnen (2) derart versetzt angeordnet sind, daß sie beim Schließen der beiden Schellenhälften (1) und (3) aneinander vorbeigehen.

2. Rohrschelle nach Anspruch 1, dadurch gekennzeichnet, daß der freibleibende Raum (11) zwischen den Einlaufwänden (10) der Klemmschenkel (7) im gegenüberliegenden Schellenteil (1 bzw. 3) durch einen am Rohrumfang anliegenden Halterinnenabschnitt (12) ausgefüllt wird, wobei zwischen zwei Halterinnenabschnitten (12) jeweils eine Aussparung (13) von einer Breite und Tiefe entsprechend der in die Aussparung (13) eintauchenden Einlaufwände (10) vorgesehen sind.

3. Rohrschelle nach Anspruch 1 oder 2,
dadurch gekennzeichnet, daß die Klemmschenkel (7) und die Aussparungen (13) jeweils die halbe Breite des Aufnahmeteils (1) bzw. des Sicherungsbügels (3) einnehmen.

4. Rohrschelle nach Anspruch 3,
dadurch gekennzeichnet, daß zwischen zwei benachbarten Halterinnen (2) jeweils nur ein Klemmschenkel (7) mit nach beiden Seiten abstehenden Rastnasen (8 bzw. 9) angeordnet ist, wobei die Rastnasen (8 bzw. 9) in achsparalleler Erstreckung der Klemmschenkel (7) abwechselnd nach der einen und der anderen Seite gerichtet sind und wobei die rückseitigen Wände (14 bzw. 15) hinter den Rastnasen (8 bzw. 9) geradlinig im gleichen Abstand an dem Rohrumfang vorbeilaufen wie die Rastnasen (8 bzw. 9) den Rohrumfang hintergreifen.

5. Rohrschelle nach einem der Ansprüche 1 bis 4,
dadurch gekennzeichnet, daß die Widerhaken (4) an den beiden äußeren Klemmschenkeln (17) oberhalb der Einlaufwände (10) angeformt und nach innen gerichtet sind, während die zugehörigen Gegenhaken (5) unterhalb der beiden äußeren Aussparungen (16) angeordnet und nach außen gerichtet sind.

6. Rohrschelle nach Anspruch 5,
dadurch gekennzeichnet, daß die Widerhaken (4) mit den zugehörigen äußeren Klemmschenkeln (17) in der Reihe der Aussparungen (13) liegen, wohingegen die Gegenhaken (5) in der Reihe der Klemmschenkel (7) angeordnet sind.

7. Rohrschelle nach Anspruch 1 oder 2,
dadurch gekennzeichnet, daß die Klemmschenkeln (7, 17) quer zur Achsrichtung der Halterinnen (2) in zwei Reihen angeordnet sind, und zwar jeweils in einer Breite, die etwas kleiner ist als 1/4 der Gesamtbreite des Aufnahmeteils (20), wobei die erste Reihe mit dessen Außenwand abschließt und die zweite Reihe kurz hinter der Mitte "M" beginnt und im Abstand einer Schenkelbreite "b" vor der anderen Außenwand endet, und wobei sowohl zwischen den beiden Reihen als auch jenseits der mittleren Reihe jeweils in der Flucht von zwei hintereinander liegenden Klemmschenkeln (7 u. 17) besagte Aussparungen (13 u. 16) vorgesehen sind.

8. Rohrschelle nach Anspruch 7,
dadurch gekennzeichnet, daß die Widerhaken (18) und Gegenhaken (19) an den diagonal gegenüberliegenden Klemmschenkeln (17) bzw. Aussparungen (16) des Aufnahmeteils (20) angeordnet und deren Verhakungsnasen (21) parallel zur Achsrichtung der Halterinnen (2) gerichtet sind.

9. Rohrschelle nach Anspruch 8,
dadurch gekennzeichnet, daß zwei diagonal gegenüberliegende Haken (18) über den Einlaufwänden (20) der äußeren Klemmschenkel (17) angeformt sind, während die beiden Gegenhaken (19) unterhalb der äußeren Aussparungen (16) angeordnet sind.

## Claims

1. A two-piece pipe clip of hard-elastic plastics material for fixing relative to each other at least two pipe lines which extend one beside the other, comprising a receiving portion having at least two holding channels adapted to the pipe line cross-sections and elastically expandable clamping limbs with retaining projections engaging behind the pipe periphery and introduction walls which diverge in a V-shape, and a securing loop which engages over the holding channels and the clamping limbs thereof and which is provided at the two loop ends with barbs which are engageable into oppositely directed barbs at the outer clamping limbs of the receiving portion in the closed position of the loop, characterised in that the securing loop (3) has the same elastically expandable clamping limbs (7), wherein they are arranged displaced relative to the clamping limbs (7) of the receiving portion (1) in the axial direction of the holding channels (2) in such a way that they move past each other when the two clip halves (1) and (3) are closed.

2. A pipe clip according to claim 1 characterised in that the space (11) which remains free between the introduction walls (10) of the clamping limbs (7) in the oppositely disposed clip portion (1 and 3 respectively) is filled by a holding channel portion (12) which bears against the pipe periphery, wherein provided between two holding channel portions (12) is a respective recess (13) of a width and depth corresponding to the introduction walls (10) which engage into the recess (13).

3. A pipe clip according to claim 1 or claim 2 characterised in that the clamping limbs (7) and the recesses (13) respectively occupy half the width of the receiving portion (1) and the securing loop (3) respectively.

4. A pipe clip according to claim 3 characterised in that only one respective clamping limb (7) with retaining projections (8 and 9) projecting towards both sides is arranged between two adjacent holdig channels (2), wherein the retaining projections (8 and 9) are directed towards one side and the other alternately in the direction of the clamping limbs (7) which is parallel to the axis, and wherein the rearward walls (14 and 15) extend behind the retaining projections (8 and 9) in a straight line past the pipe periphery at the same spacing as the retaining projections (8 and 9) engage behind the pipe periphery.

5. A pipe clip according to one of claims 1 to 4 characterised in that the barbs (4) are formed on the two outer clamping limbs (17) above the introduction walls (10) and are directed inwardly while the associated co-operating hooks (5) are arranged beneath the two outer recesses (16) and are directed outwardly.

6. A pipe clip according to claim 5 characterised in that the barbs (4) with the associated outer clamping limbs (17) lie in the line of the recesses (13) whereas the co-operating hooks (5) are arranged in the line of the clamping limbs (7).

7. A pipe clip according to claim 1 or claim 2 characterised in that the clamping limbs (7, 17) are arranged in two lines transversely to the axial direction of the holding channels (2), more specifically in each case in a width which is somewhat smaller than one quarter of the total width of the receiving portion (20), wherein the first line terminates with the outside wall of the receiving portion and the second line begins just behind the middle 'M' and terminates at the spacing of a limb width 'b' before the other outside wall, and wherein said recesses (13 and 16) are provided both between the two lines and also on the other side of the middle row in each case in alignment with two clamping limbs (7 and 17) which lie one behind the other.

8. A pipe clip according to claim 7 characterised in that the barbs (18) and co-operating hooks (19) are arranged at the diagonally opposite clamping limbs (17) and recesses (16) respectively of the receiving portion (20) and the hooking projections (21) thereof are directed parallel to the axial direction of the holding channels (2).

9. A pipe clip according to claim 8 characterised in that two diagonally opposite hooks (18) are formed above the introduction walls (20) of the outer clamping limbs (17) while the two co-operating hooks (19) are arranged beneath the outer recesses (16).

## Revendications

1. Collier d'attache de canalisations en deux parties, réalisé en matière plastique à cédage élastique dur, pour la fixation en position de deux canalisations au moins placées l'une à côté de l'autre, se composant d'une partie formant logement comportant au moins deux goulottes de retenue adaptées aux sections des canalisations et des pattes de serrage pouvant s'écarter par cédage élastique munies d'ergots d'accrochage venant cramponner par derrière la périphérie des canalisations et de parois d'introduction s'écartant les unes des autres en forme de V, ainsi que d'un étrier d'immobilisation venant cramponner par le haut les goulottes de retenue et leurs pattes de serrage, étriers munis à ses deux extrémités d'éléments d'accrochage antagonistes qui viennent s'accrocher à des éléments d'accrochage antagonistes au niveau des pattes de serrage extèrieures de la partie formant logement lorsque l'étrier se trouve en position de fermeture, se caractérisant par le fait que l'étrier d'immobilisation (3) comporte les mêmes pattes de serrage expansibles par cédage élastique (7), ces dernières étant en l'occurrence disposées par rapport aux pattes aux pattes de cédage (7) de la partie formant logement (1) dans l'alignement axial des goulottes de retenue(2) dans des conditions telles qu'elles passent l'une à côte de l'autre lorsque l'on ferme les deux moitiés du collier (1) et (3).

2. Collier d'attache de canalisations suivant la revendication 1, se caractérisant par le fait que l'espace libre (11) existant entre les parois d'introduction (10) des pattes de serrage (7) de la partie opposée du collier (1 ou 3) se trouve comblé par une section intérieure de retenue (12), en appui sur la circonfèrence de la canalisation, avec respectivement entre les deux sections internes de retenue (12) un évidement (13) dont la largeur et la profondeur sont dimensionnées en fonction des parois d'introduction (10) s'insérant dans l'évidement (13).

3. Collier d'attache de canalisations suivant la revendication 1 et 2 se caractérisant par le fait que les pattes de serrage et les évidements (13) correspondent respectivement à la demi-largeur de la partie formant logement (1) et de l'étrier d'immobilisation (3).

4. Collier d'attache de canalisations suivant la revendication 3 se caractérisant par le fait qu'il est prévu entre deux goulottes de retenue (2) voisines, une seule patte de serrage (7) munie d'ergots d'accrochage (8 et 9) faisant saillie de deux côtés, ces ergots d'accrochage (8 et 9) étant en l'occurrence orientés dans le plan de déploiement parralléle à l'axe des pattes de serrage (7), alternativement d'un côté et de l'autre et par le fait que les parois arrières (14 et 15) passent devant la périphérie des canalisations suivant une orientation rectiligne dans les mêmes conditions d'écartement que celles dans lesquelles les ergots d'accrochage (8 et 9) viennent cramponner par derrière la périphérie des canalisations.

5. Collier d'attache de canalisations suivant une des revendications 1 à 4, se caractérisant pu le fait que les crochets antagonistes (4) sont réalisés solidaires par moulage des deux pattes de serrage extérieures (17) au-dessus des parois d'introduction (10) et sont orientés vers l'intérieur, cependant que les crochets opposés correspondants (5) sont disposés en dessous des deux évidements extérieurs (16) et sont orientés vers l'extérieur.

6. Collier d'attache de canalisations suivant la revendication 5 se caractérisant par le fait que les crochets antagonistes (4) se situent au niveau de leurs pattes de serrage extérieures (17) dans la rangée des évidements (13), alors que les crochets antagonistes (5) sont disposés dans la rangée des pattes de serrage (7).

7. Collier d'attache de canalisations suivant la revendication 1 ou 2, se caractérisant par le fait que les pattes de serrage (7 et 17) sont disposées obliquement par rapport au plan axial des goulottes de retenue (2), en deux rangées et ceci respectivement dans une largeur qui est légèrement plus petite que le 1/4 de la largeur totale de la partie formant logement (20), la première rangée se terminant en l'occurrence au niveau de sa paroi extèrieure et la deuxième rangée prenant naissance légérement derrière le centre "M" et se terminant avec un intervalle correspondant à la largeur d'une patte "b" en amont de l'autre paroi extèrieure et par le fait qu'il est prévu, aussi bien entre ces deux rangées que de l'autre côté de la rangée centrale, respectivement dans l'alignement de deux pattes de serrage (7 et 17) disposées l'une derrière l'autre, les évidements (13 et 16) dont il a été question plus haut.

8. Collier d'atache de canalisations suivant la revendication 7, se caractérisant par le fait que les crochets antagonistes (18) et les crochets opposés (19) sont disposés au niveau des pattes de serrage (17) et des évidements (16) diamétralement opposés de la partie formant logement (20) et que leur ergots d'accrochage (21) sont orientés parrallélement au plan axial des goulottes de retenue (2).

9. Collier d'attache de canalisations suivant la revendication 8, se caractérisant par la fait que deux crochets (18) diamétralement opposés sont réalisés solidaires par moulage au-dessus des parois d'introduction (20) des pattes de serrage (17), cependant que les deux crochets opposés (19) sont disposés au dessous des évidements extérieurs (16).
